(19) Europäisches Patentamt
European Patent Office
Office européen des brevets

(11) EP 4 653 478 A1

(12) EUROPEAN PATENT APPLICATION

(43) Date of publication:
**26.11.2025 Bulletin 2025/48**

(21) Application number: **24382544.5**

(22) Date of filing: **23.05.2024**

(51) International Patent Classification (IPC):
***C08F 210/16*** (2006.01) ***C08F 210/14*** (2006.01)
***C08F 232/04*** (2006.01) ***C08F 4/649*** (2006.01)
***C08F 236/20*** (2006.01) ***C08F 4/6592*** (2006.01)

(52) Cooperative Patent Classification (CPC):
(C-Sets available)
C08F 4/65908 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Dow Global Technologies LLC**
**Midland, MI 48674 (US)**

(72) Inventors:
- **LI PI SHAN, Colin**
  **Lake Jackson, 77566 (US)**
- **DALLER, Joseph L.**
  **Midland, 48674 (US)**
- **BREMER, Sean A.**
  **Midland, 48674 (US)**
- **NETT, Alex J.**
  **Midland, 48674 (US)**
- **TUBERQUIA, Juan C.**
  **Lake Jackson, 77566 (US)**
- **CHRISTIANSON, Matthew D.**
  **Midland, 48674 (US)**
- **KLOSIN, Jerzy**
  **Midland, 48674 (US)**
- **MCLENNAGHAN, Allan Walter**
  **43006 Tarragona (ES)**
- **WINKLER, Ryan L.**
  **Houston, 77006 (US)**
- **ZOGG Jr, Michael J.**
  **Lake Jackson, 77566 (US)**
- **GAMBREL, Timothy W.**
  **Lake Jackson, 77566 (US)**

(74) Representative: **Elzaburu S.L.P.**
**Edificio Torre de Cristal**
**Paseo de la Castellana 259 C, planta 28**
**28046 Madrid (ES)**

# (54) POLYOLEFIN ELASTOMER AND ITS USE IN ADHESIVE COMPOSITIONS WITH IMPROVED PEEL STRENGTH

(57) Embodiments are directed to a polyolefin elastomer comprising a polymerized reaction product of 50 mol% to 99.5 mol% ethylene, 0.5 mol% to 30 mol% $C_3$-$C_{14}$ $\alpha$-olefin, and 0.5 mol% to 20 mol% cyclic olefin. The polyolefin elastomer comprises a glass transition temperature of -50 °C to 30 °C, as measured according to Differential Scanning Calorimetry and a weight average molecular weight of 5,000 g/mol to 150,000 g/mol, as measured according to conventional Gel Permeation Chromatography. Further embodiments are directed to adhesive compositions comprising the polyolefin elastomer.

EP 4 653 478 A1

(52) Cooperative Patent Classification (CPC): (Cont.)

C-Sets
**C08F 210/16, C08F 4/649;**
**C08F 210/16, C08F 4/6592;**
**C08F 210/16, C08F 232/04, C08F 210/14;**
**C08F 210/16, C08F 236/20, C08F 210/14;**
C08F 210/16, C08F 232/04, C08F 210/14,
C08F 2500/02, C08F 2500/03, C08F 2500/27,
C08F 2500/32, C08F 2500/34;
C08F 210/16, C08F 236/20, C08F 210/14,
C08F 2500/02, C08F 2500/03, C08F 2500/27,
C08F 2500/32, C08F 2500/34

## Description

TECHNICAL FIELD

Embodiments of the present disclosure generally relate to polyolefin elastomers and specifically relate to polyolefin elastomers used in adhesive compositions to impart peel strength.

BACKGROUND

Polyolefin adhesives including polyolefin elastomer, tackifier, and oil are widely used in various applications, such as hygiene adhesives and packaging adhesives. Tackifier is a low molecular weight compound that increases the glass transition temperature ($T_g$) of the formulation closer to the end-use temperature (e.g., -50 °C to 30 °C). The formulation has optimal performance, such as peel strength, at or near the $T_g$ of the formulation. Due to the relatively low $T_g$ of polyolefin elastomers used in conventional adhesive compositions, such as ethylene-1-octene copolymers having a $T_g$ of about -55 °C, a relatively large amount of tackifier (e.g., greater than 60 wt%) may be needed to provide an adhesive composition having a desirable $T_g$. A relatively large amount of tackifier may lead to leaching of the tackifier out of the adhesive composition and onto skin of a user, in the case of a hygiene application, or onto packaging, in the case of a packaging application.

Accordingly, there is a need for improved polyolefin elastomers to form adhesive compositions having a desired $T_g$ without the addition of tackifiers.

SUMMARY

The embodiments of the present disclosure meet this need by utilizing a combination of ethylene, $C_3$-$C_{14}$ $\alpha$-olefin, whose homopolymer has a relatively low $T_g$, and cyclic olefin, whose homopolymer has a relatively high $T_g$. This resulted in a polyolefin elastomer with a tailored $T_g$ (e.g., -50 °C to 30 °C), thereby imparting an improved peel strength to an adhesive composition including the polyolefin elastomer. The resulting polyolefin elastomers also have a weight average molecular weight ($M_w$) of 5,000 g/mol to 150,000 g/mol, which ensures that an adhesive composition including the polyolefin elastomer has a desired viscosity (e.g., a Brookfield viscosity of less than or equal to 30,000 millipascal-seconds (mPas), as measured at 150 °C).

In one embodiment, a polyolefin elastomer comprises: a polymerized reaction product of 50 mol% to 99.5 mol% ethylene; 0.5 mol% to 30 mol% $C_3$-$C_{14}$ $\alpha$-olefin; and 0.5 mol% to 20 mol% cyclic olefin, wherein the polyolefin elastomer comprises: a glass transition temperature ($T_g$) of -50 °C to 30 °C, as measured according to Differential Scanning Calorimetry (DSC); and a weight average molecular weight ($M_w$) of 5,000 g/mol to 150,000 g/mol, as measured according to conventional Gel Permeation Chromatography (GPC).

Additional features and advantages will be set forth in the detailed description, which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter.

BRIEF DESCRIPTION OF THE DRAWINGS

The following detailed description of specific embodiments of the present disclosure can be best understood when read in conjunction with the following drawings, where like structure is indicated with like reference numerals and in which:

FIG. 1 schematically illustrates a film, according to one or more embodiments described in this disclosure;
FIG. 2 schematically illustrates a process flow diagram for synthesis of an exemplary polyolefin elastomer, according to one or more embodiments shown and described herein; and
FIG. 3 graphically illustrates peel strength (N/25 mm) versus $T_g$ of polymer (°C) for comparative and exemplary adhesive compositions, according to one or more embodiments described in this disclosure.

Reference will now be made in detail to various embodiments, some embodiments of which are illustrated in the accompanying drawings.

DETAILED DESCRIPTION

Specific embodiments of the present application will now be described. The disclosure may be embodied in different forms and should not be construed as limited to the embodiments set forth in this disclosure. Rather, these embodiments are provided so that this disclosure will be thorough and complete, and will fully convey the scope of the subject matter to those skilled in the art.

DEFINITIONS

Unless stated to the contrary, implicit from the context, or customary in the art, all test methods are current as of the filing date of this disclosure.

The amount of a component (e.g., ethylene, cyclic olefin, and $C_3$-$C_{14}$ $\alpha$-olefin) in the reaction product is provided herein in mole percent (mol%), based on the total number of moles of the polyolefin elastomer (i.e., the reaction product), unless otherwise noted.

The amount of a component (e.g., polyolefin elastomer tackifier, oil, and antioxidant) in the adhesive composition is provided herein in weight percent (wt%), based on the total weight of the adhesive composition, unless otherwise noted.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

The term "polymer" refers to a material prepared by catalytically reacting (*i.e.*, polymerizing) a set of monomers, wherein the set is a homogenous (*i.e.*, only one type) set of monomers or a heterogeneous (*i.e.*, more than one type) set of monomers. The generic term polymer as used herein includes the term "homopolymer," which refers to polymers prepared from a homogenous set of monomers, and the term "interpolymer" as defined below.

The term homopolymer is employed to refer to polymers prepared from only one type of monomer, with the understanding that trace amounts of impurities can be incorporated into the polymer structure. For example, references to an ethylene homopolymer refer to polymer prepared only from ethylene monomers (i.e., polyethylene). References to cyclic olefin homopolymer refer to polymers prepared only from cyclic olefin monomers. References to $C_3$-$C_{14}$ $\alpha$-olefin homopolymer refer to polymers prepared only from $C_3$-$C_{14}$ $\alpha$-olefin monomers.

The term "interpolymer" refers to a polymer prepared by the polymerization of at least two different types of monomers. This term includes both "copolymers," i.e., polymers prepared from two different types of monomers, and polymers prepared from more than two different types of monomers, *e.g.*, terpolymers, tetrapolymers, etc. This term also embraces all forms of interpolymers, such as random, block, homogeneous, heterogeneous, etc.

An "ethylene-based polymer" is a polymer that contains a majority amount of polymerized ethylene, based on the mole percentage (mol%) of the polymer, and, optionally, may further contain polymerized units of at least one comonomer. An "ethylene-based interpolymer" is an interpolymer that contains, in polymerized form, a majority amount of ethylene, based on the moles of the interpolymer, and further contains polymerized units of at least one comonomer. An "ethylene homopolymer" is a polymer that comprises repeating units derived from ethylene but does not exclude residual amounts of other components.

The term "ethylene-alpha-olefin interpolymer," as used herein, refers to a polymer that comprises, in polymerized form, a majority mole percent of ethylene (based on the moles of the interpolymer), and at least one comonomer that is an alpha-olefin. The ethylene-alpha-olefin interpolymer may be a random or block interpolymer. The terms "ethylene-alpha-olefin copolymer" and "ethylene-alpha-olefin multi-block interpolymer" are covered by the term "ethylene-alpha-olefin interpolymer."

The term "ethylene-alpha-olefin copolymer," as used herein, refers to a copolymer that comprises, in polymerized form, a majority mole percent of ethylene (based on the moles of the copolymer), and a comonomer that is an alpha-olefin, where ethylene and the alpha-olefin are the only two monomer types. The ethylene-alpha-olefin copolymer does not exclude residual amounts of other components. The ethylene-alpha-olefin copolymer may be a random or block copolymer.

The terms "comprising", "including", "having", and their derivatives, are not intended to exclude the presence of any additional components, steps or procedures, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure, not specifically delineated or listed.

The terms "improved peel strength" or "increased peel strength," as used herein, refer to a peel strength of an

adhesive composition, comprising ethylene, $C_3$-$C_{14}$ α-olefin, and cyclic olefin as described herein, that is greater than a peel strength than a similar adhesive composition that is identical to the adhesive composition except that the similar adhesive composition lacks cyclic olefin.

EMBODIMENTS

Polyolefin Elastomer

Embodiments of the present disclosure are directed to a polyolefin elastomer comprising a polymerized reaction product of 50 mol% to 99.5 mol% ethylene, 0.5 mol% to 30 mol% $C_3$-$C_{14}$ α-olefin, and 0.5 mol% to 20 mol% cyclic olefin. The polyolefin elastomer comprises a glass transition temperature ($T_g$) of -50 °C to 30 °C, as measured according to Differential Scanning Calorimetry (DSC) and a weight average molecular weight ($M_w$) of 5,000 g/mol to 150,000 g/mol, as measured according to conventional Gel Permeation Chromatography (GPC). Further embodiments are directed to adhesive compositions comprising the polyolefin elastomer.

The $T_g$ of a polyolefin elastomer may be influenced by the weight fractions of each comonomer and the respective $T_g$ contributions of each comonomer. Ethylene may impact the $T_g$ of the polyolefin elastomer. Replacing ethylene with cyclic olefin may increase the $T_g$ of the polyolefin elastomer. Replacing ethylene with $C_3$-$C_{14}$ α-olefin may decrease the $T_g$ of the polyolefin elastomer. Ethylene may also impart desired mechanical properties, such as impact resistance, and crystallinity to the polyolefin elastomer.

A minimum amount of ethylene (e.g., greater than or equal to 50 mol%) may be included in the polyolefin elastomer to achieve a tailored $T_g$ (-50 °C to 30 °C) and to impart desired mechanical properties and crystallinity. The amount of ethylene may be limited (e.g., less than or equal to 99.5 mol%) to ensure a sufficient amount of $C_3$-$C_{14}$ α-olefin and cyclic olefin is present in the polyolefin elastomer to achieve a tailored $T_g$ (e.g., -50 °C to 30 °C). In embodiments, the polyolefin elastomer may comprise 50 mol% to 99.5 mol% ethylene. In embodiments, the polyolefin elastomer may comprise 85 mol% to 93 mol% ethylene. In embodiments, the amount of ethylene in the polyolefin elastomer may be greater than or equal to 50 mol%, greater than or equal to 55 mol%, greater than or equal to 60 mol%, greater than or equal to 65 mol%, greater than or equal to 70 mol%, greater than or equal to 75 mol%, greater than or equal to 80 mol%, or even greater than or equal to 85 mol%. In embodiments, the amount of ethylene in the polyolefin elastomer may be less than or equal to 99.5 mol%, less than or equal to 97 mol%, less than or equal to 95 mol%, less than or equal to 93 mol%, or even less than or equal to 90 mol%. In embodiments, the amount of ethylene in the polyolefin elastomer may be from 50 mol% to 99.5 mol%, from 50 mol% to 97 mol%, from 50 mol% to 95 mol%, from 50 mol% to 93 mol%, from 50 mol% to 90 mol%, from 55 mol% to 99.5 mol%, from 55 mol% to 97 mol%, from 55 mol% to 95 mol%, from 55 mol% to 93 mol%, from 55 mol% to 90 mol%, from 60 mol% to 99.5 mol%, from 60 mol% to 97 mol%, from 60 mol% to 95 mol%, from 60 mol% to 93 mol%, from 60 mol% to 90 mol%, from 65 mol% to 99.5 mol%, from 65 mol% to 97 mol%, from 65 mol% to 95 mol%, from 65 mol% to 93 mol%, from 65 mol% to 90 mol%, from 70 mol% to 99.5 mol%, from 70 mol% to 97 mol%, from 70 mol% to 95 mol%, from 70 mol% to 93 mol%, from 70 mol% to 90 mol%, from 75 mol% to 99.5 mol%, from 75 mol% to 97 mol%, from 75 mol% to 95 mol%, from 75 mol% to 93 mol%, from 75 mol% to 90 mol%, from 80 mol% to 99.5 mol%, from 80 mol% to 97 mol%, from 80 mol% to 95 mol%, from 80 mol% to 93 mol%, from 80 mol% to 90 mol%, from 85 mol% to 99.5 mol%, from 85 mol% to 97 mol%, from 85 mol% to 95 mol%, from 85 mol% to 93 mol%, or even from 85 mol% to 90 mol%, or any and all sub-ranges formed from any of these endpoints.

$C_3$-$C_{14}$ α-olefin, whose homopolymer has a relatively low $T_g$ (e.g., less than or equal to 10 °C), may, in combination with ethylene and cyclic olefin, whose homopolymer has a relatively high $T_g$, help to achieve a tailored $T_g$ (e.g., -50 °C to 30 °C). Specifically, the $C_3$-$C_{14}$ α-olefin decreases the $T_g$ and ensures that the $T_g$ is not undesirably high (e.g., greater than 30 °C). While not wishing to be bound by theory, the impact of α-olefin on the resulting $T_g$ of the polyolefin elastomer may be attributed to the conformational freedom imparted by the identity of the short chain branch created by its incorporation.

In embodiments, a homopolymer of the $C_3$-$C_{14}$ α-olefin may have a $T_g$ from -70 °C to 10 °C, from -70 °C to 0 °C, from -70 °C to -10 °C, from -70 °C to -20 °C, from -70 °C to -30 °C, from -70 °C to -40 °C, from -50 °C to 10 °C, from -50 °C to 0 °C, from -50 °C to -10 °C, from -50 °C to -20 °C, from -50 °C to -30 °C, from -50 °C to -40 °C, from - 30 °C to 10 °C, from -30 °C to 0 °C, from -30 °C to -10 °C, from -30 °C to -20 °C, from - 10 °C to 10 °C, or even from -10 °C to 0 °C, or any and all sub-ranges formed from any of these endpoints as measured according to DSC.

In embodiments, the $C_3$-$C_{14}$ α-olefin may comprise $C_3$-$C_{14}$ α-olefin, $C_3$-$C_{12}$ α-olefin, $C_3$-$C_{10}$ α-olefin, $C_3$-$C_8$ α-olefin, $C_3$-$C_6$ α-olefin, $C_5$-$C_{14}$ α-olefin, $C_5$-$C_{12}$ α-olefin, $C_5$-$C_{10}$ α-olefin, $C_5$-$C_8$ α-olefin, $C_5$-$C_6$ α-olefin, $C_7$-$C_{14}$ α-olefin, $C_7$-$C_{12}$ α-olefin, $C_7$-$C_{10}$ α-olefin, $C_7$-$C_8$ α-olefin, $C_9$-$C_{14}$ α-olefin, $C_9$-$C_{12}$ α-olefin, $C_9$-$C_{10}$ α-olefin, $C_{11}$-$C_{14}$ α-olefin, $C_{11}$-$C_{12}$ α-olefin, or α-olefin having a range of the number of carbon atoms formed from any of these endpoints. In embodiments, the $C_3$-$C_{14}$ α-olefin may comprise propene, butene, pentene, hexene, heptene, octene, nonene, decene, undecene, dodecene, tridecene, tetradecane, 3-methyl-1-butene, or 4-methyl-1-pentene. In embodiments, the $C_3$-$C_{14}$ α-olefin may comprise octene.

The polyolefin elastomer may comprise 0.5 mol% to 30 mol% $C_3$-$C_{14}$ $\alpha$-olefin to achieve a desired $T_g$ (e.g., -50 °C to 30 °C). In embodiments, the polyolefin elastomer may comprise 1 mol% to 5 mol% $C_3$-$C_{14}$ $\alpha$-olefin. In embodiments, the amount of $C_3$-$C_{14}$ $\alpha$-olefin in the polyolefin elastomer may be greater than or equal to 0.5 mol%, greater than or equal to 1 mol%, or even greater than or equal to 1.5 mol%. In embodiments, the amount of $C_3$-$C_{14}$ $\alpha$-olefin in the polyolefin elastomer may be less than or equal to 30 mol%, less than or equal to 20 mol%, less than or equal to 10 mol%, less than or equal to 5 mol%, or even less than or equal to 3 mol%. In embodiments, the amount of $C_3$-$C_{14}$ $\alpha$-olefin in the polyolefin elastomer may be from 0.5 mol% to 30 mol%, from 0.5 mol% to 20 mol%, from 0.5 mol% to 10 mol%, from 0.5 mol% to 5 mol%, from 0.5 mol% to 3 mol%, from 1 mol% to 30 mol%, from 1 mol% to 20 mol%, from 1 mol% to 10 mol%, from 1 mol% to 5 mol%, from 1 mol% to 3 mol%, from 1.5 mol% to 30 mol%, from 1.5 mol% to 20 mol%, from 1.5 mol% to 10 mol%, from 1.5 mol% to 5 mol%, or even from 1.5 mol% to 3 mol%, or any and all sub-ranges formed from any of these endpoints.

Cyclic olefin, whose homopolymer has a relatively high $T_g$ (e.g., greater than or equal to 30 °C), may, in combination with ethylene and$C_3$-$C_{14}$ $\alpha$-olefin, whose homopolymer has a relatively low $T_g$, help to achieve a desired $T_g$ (e.g., -50 °C to 30 °C). Specifically, the cyclic olefin increases the $T_g$ and ensures that the $T_g$ is not undesirably low (e.g., less than -50 °C). While not wishing to be bound by theory, the impact of cyclic olefin on the resulting $T_g$ of the polyolefin elastomer may be attributed to the rigidity and restricted bond rotation imparted by the cyclic nature of the incorporated monomer.

In embodiments, a homopolymer of the cyclic olefin may have a $T_g$ from 30 °C to 400 °C, from 30 °C to 350 °C, from 30 °C to 300 °C, from 30 °C to 250 °C, from 30 °C to 200 °C, from 50 °C to 400 °C, from 50 °C to 350 °C, from 50 °C to 300 °C, from 50 °C to 250 °C, from 50 °C to 200 °C, from 100 °C to 400 °C, from 100 °C to 350 °C, from 100 °C to 300 °C, from 100 °C to 250 °C, from 100 °C to 200 °C, from 150 °C to 400 °C, from 150 °C to 350 °C, from 150 °C to 300 °C, from 150 °C to 250 °C, from 150 °C to 200 °C, from 200 °C to 400 °C, from 200 °C to 350 °C, from 200 °C to 300 °C, from 250 °C to 400 °C, from 250 °C to 350 °C, from 250 °C to 300 °C, from 300 °C to 400 °C, from 300 °C to 350 °C, or even from 350 °C to 400 °C, or any and all sub-ranges formed from any of these endpoints, as measured according to DSC.

In embodiments, the cyclic olefin may comprise norbornene, 5-ethylidene-2-norbornene, cyclopentene, dicyclopentadiene, or a combination thereof.

The polyolefin elastomer may comprise 0.5 mol% to 20 mol% cyclic olefin to achieve a desired $T_g$ (e.g., -50 °C to 30 °C). In embodiments, the polyolefin elastomer may comprise 5 mol% to 15 mol% cyclic olefin. In embodiments, the amount of cyclic olefin in the polyolefin elastomer may be greater than or equal to 0.5 mol%, greater than or equal to 1 mol%, greater than or equal to 3 mol%, greater than or equal to 5 mol%, greater than or equal to 8 mol%, or even greater than or equal to 10 mol%. In embodiments, the amount of cyclic olefin in the polyolefin elastomer may be less than or equal to 20 mol%, less than or equal to 17 mol%, less than or equal to 15 mol%, less than or equal to 13 mol%, or even less than or equal to 10 mol%. In embodiments, the amount of cyclic olefin in the polyolefin elastomer may be from 0.5 mol°7o to 20 mol%, from 0.5 mol% to 17 mol%, from 0.5 mol% to 15 mol%, from 0.5 mol% to 13 mol%, from 0.5 mol% to 10 mol%, from 1 mol% to 20 mol%, from 1 mol% to 17 mol%, from 1 mol% to 15 mol%, from 1 mol% to 13 mol%, from 1 mol% to 10 mol%, from 3 mol% to 20 mol%, from 3 mol% to 17 mol%, from 3 mol% to 15 mol%, from 3 mol% to 13 mol%, from 3 mol% to 10 mol%, from 5 mol% to 20 mol%, from 5 mol% to 17 mol%, from 5 mol% to 15 mol%, from 5 mol% to 13 mol%, from 5 mol% to 10 mol%, from 7 mol% to 20 mol%, from 7 mol% to 17 mol%, from 7 mol% to 15 mol%, from 7 mol% to 13 mol%, from 7 mol% to 10 mol%, from 10 mol% to 20 mol%, from 10 mol% to 17 mol%, from 10 mol% to 15 mol%, or even from 10 mol% to 13 mol%, or any and all sub-ranges formed from any of these endpoints.

In embodiments, the polyolefin elastomer may comprise 85 mol% to 93 mol% ethylene; 1 mol% to 5 mol% $C_3$-$C_{14}$ $\alpha$-olefin; and 5 mol% to 15 mol% cyclic olefin.

In addition to the amounts thereof, a molar ratio of the $C_3$-$C_{14}$ $\alpha$-olefin to the cyclic olefin may be determinative of the $T_g$ of the polyolefin elastomer. In embodiments, a molar ratio of the $C_3$-$C_{14}$ $\alpha$-olefin to the cyclic olefin may be from 1:0.08 to 0.08:1. In embodiments, a molar ratio of the $C_3$-$C_{14}$ $\alpha$-olefin to the cyclic olefin may be from 1:0.08 to 0.08:1, from 1:0.08 to 0.04:1, from 1:0.08 to 1:0.8, from 1:0.08 to 1:0.4, from 1:0.08 to 1:1, from 1:0.04 to 0.08:1, from 1:0.04 to 0.04:1, from 1:0.04 to 1:0.8, from 1:0.04 to 1:0.4, from 1:0.04 to 1:1, from 1:0.8 to 0.08:1, from 1:0.8 to 0.04:1, from 1:0.8 to 1:0.8, from 1:0.8 to 1:0.4, from 1:0.8 to 1:1, from 1:0.4 to 0.08:1, from 1:0.4 to 0.04:1, from 1:0.4 to 1:0.8, from 1:0.4 to 1:0.4, or even from 1:0.4 to 1:1, or any and all sub-ranges formed from any of these endpoints.

As described herein, the peel strength of a material will be enhanced at temperatures near the $T_g$ of the material. For an adhesive composition used in, for example, hygiene adhesives and packaging adhesives, the temperature range that the material is subjected to may be relatively large. When the polyolefin elastomer is included in an adhesive composition including tackifiers, the effective $T_g$ (i.e., $T_g$ of the adhesive composition) may increase. As such, the polyolefin elastomers described herein may have a minimum $T_g$ (e.g., greater than or equal to -50 °C) which is closer to the temperature at which the polyolefin elastomer adhesive will be used, thus accounting for the effect the tackifier may have on $T_g$. At relatively higher $T_g$ (e.g., greater than 30 °C), the polyolefin elastomer may have a relatively low crystallinity, which may be undesirable in certain applications. As such, the $T_g$ may be limited (e.g., less than or equal to 30 °C).

Accordingly, in embodiments, the polyolefin elastomer may have a $T_g$ of -50 °C to 30 °C, as measured according to DSC. In embodiments, the polyolefin elastomer may have a $T_g$ of -50 °C to -10 °C, as measured according to DSC. In

embodiments, the $T_g$ of the polyolefin elastomer may be greater than or equal to -50 °C, greater than or equal to - 45 °C, greater than or equal to -40 °C, greater than or equal to -35 °C, greater than or equal to -30 °C, greater than or equal to -25 °C, greater than or equal to -20 °C, or even greater than or equal to -15 °C. In embodiments, the $T_g$ of the polyolefin elastomer may be less than or equal to 30 °C, less than or equal to 20 °C, less than or equal to 10 °C, less than or equal to 0 °C, or even less than or equal to -10 °C. In embodiments, the $T_g$ of the polyolefin elastomer may be from -50 °C to 30 °C, from -45 °C to 30 °C, from -40 °C to 30 °C, from -35 °C to 30 °C, from -30 °C to 30 °C, from -25 °C to 30 °C, from -20 °C to 30 °C, from - 15 °C to 30 °C, from -50 °C to 20 °C, from -45 °C to 20 °C, from -40 °C to 20 °C, from - 35 °C to 20 °C, from -30 °C to 20 °C, from -25 °C to 20 °C, from -20 °C to 20 °C, from - 15 °C to 20 °C, from -50 °C to 10 °C, from -45 °C to 10 °C, from -40 °C to 10 °C, from - 35 °C to 10 °C, from -30 °C to 10 °C, from -25 °C to 10 °C, from -20 °C to 10 °C, from - 15 °C to 10 °C, from -50 °C to 0 °C, from -45 °C to 0 °C, from -40 °C to 0 °C, from -35 °C to 0 °C, from -30 °C to 0 °C, from -25 °C to 0 °C, from -20 °C to 0 °C, from -15 °C to 0 °C, from -50 °C to -10 °C, from -45 °C to -10 °C, from -40 °C to -10 °C, from -35 °C to -10 °C, from -30 °C to -10 °C, from -25 °C to -10 °C, from -20 °C to -10 °C, or even from -15 °C to -10 °C, or any and all sub-ranges formed from any of these endpoints.

The polyolefin elastomer may comprise a $M_w$ of 5,000 g/mol to 150,000 g/mol, as measured according to GPC, to ensure that an adhesive composition including the polyolefin elastomer has a desired viscosity (e.g., a Brookfield viscosity of less than or equal to 30,000 mPas, as measured at 150 °C). A certain viscosity may be desired depending on the method of applying the adhesive composition to a substrate, such as a sprayer. In embodiments, the polyolefin elastomer may comprise a $M_w$ of 10,000 g/mol to 25,000 g/mol, as measured according to GPC. In embodiments, the $M_w$ of the polyolefin elastomer may be greater than or equal to 5,000 g/mol; greater than or equal to 7,500 g/mol; or even greater than or equal to 10,000 g/mol. In embodiments, the $M_w$ of the polyolefin elastomer may be less than or equal to 150,000 g/mol; less than or equal to 125,000 g/mol; less than or equal to 100,000 g/mol; less than or equal to 75,000 g/mol; less than or equal to 50,000 g/mol; less than or equal to 25,000 g/mol; or even less than or equal to 20,000 g/mol. In embodiments, the $M_w$ of the polyolefin elastomer may be from 5,000 g/mol to 150,000 g/mol; from 5,000 g/mol to 125,000 g/mol; from 5,000 g/mol to 100,000 g/mol; from 5,000 g/mol to 75,000 g/mol; from 5,000 g/mol to 50,000 g/mol; from 5,000 g/mol to 25,000 g/mol; from 5,000 g/mol to 20,000 g/mol; from 7,500 g/mol to 150,000 g/mol; from 7,500 g/mol to 125,000 g/mol; from 7,500 g/mol to 100,000 g/mol; from 7,500 g/mol to 75,000 g/mol; from 7,500 g/mol to 50,000 g/mol; from 7,500 g/mol to 25,000 g/mol; from 7,500 g/mol to 20,000 g/mol; from 10,000 g/mol to 150,000 g/mol; from 10,000 g/mol to 125,000 g/mol; from 10,000 g/mol to 100,000 g/mol; from 10,000 g/mol to 75,000 g/mol; from 10,000 g/mol to 50,000 g/mol; from 10,000 g/mol to 25,000 g/mol; or even from 10,000 g/mol to 20,000 g/mol; or any and all sub-ranges formed from any of these endpoints.

In certain adhesive applications, it may be desirable for the adhesive composition including the polyolefin to have a relatively high optical clarity. As such, the crystallinity of the polyolefin elastomer may be limited and, in some embodiments, the crystallinity may be 0%. It may also be desirable for the polyolefin elastomer to have a crystallinity greater than 0% to improve the handling thereof. Accordingly, in embodiments, the polyolefin elastomer may comprise a crystallinity from 0% to 40%, as measured according to DSC. In embodiments, the polyolefin elastomer may comprise a crystallinity greater than or equal to 0%, greater than or equal to 5%, greater than or equal to 10%, greater than or equal to 15%, greater than or equal to 20%, or even greater than or equal to 25%. In embodiments, the polyolefin elastomer may comprise a crystallinity less than or equal to 40%, less than or equal to 30%, less than or equal to 20%, less than or equal to 10%, or even less than or equal to 5%. In embodiments, the polyolefin elastomer may comprise a crystallinity from 0% to 40%, from 0% to 30%, from 0% to 20%, from 0% to 10%, from 0% to 5%, from 5% to 40%, from 5% to 30%, from 5% to 20%, from 5% to 10%, from 10% to 40%, from 10% to 30%, from 10% to 20%, from 15% to 40%, from 15% to 30%, from 15% to 20%, from 20% to 40%, from 20% to 30%, from 25% to 40%, or even from 25% to 30%, or any and all sub-ranges formed from any of these endpoints.

In embodiments, the polyolefin elastomer may have a melting temperature ($T_m$) less than or equal to 100 °C, as measured according to DSC, to reduce the temperature at which the molten adhesive composition including the polyolefin elastomer is applied to a substrate. In embodiments, the polyolefin elastomer may have a $T_m$ less than or equal to 100 °C, less than or equal to 95 °C, less than or equal to 90 °C, less than or equal to 85 °C, less than or equal to 80 °C, less than or equal to 75 °C, or even less than or equal to 70 °C.

In embodiments, the polyolefin elastomer may comprise a polydispersity index (PDI) of from 1.5 to 20.0, from 1.5 to 15.0, from 1.5 to 10.0, from 1.5 to 7.0, from 1.5 to 5.0, from 1.5 to 4.5, from 1.5 to 4.0, from 1.5 to 3.5, from 1.5 to 3.0, from 2.0 to 20.0, from 2.0 to 15.0, from 2.0 to 10.0, from 2.0 to 7.0, from 2.0 to 5.0, from 2.0 to 4.5, from 2.0 to 4.0, from 2.0 to 3.5, from 2.0 to 3.0, from 2.5 to 20.0, from 2.5 to 15.0, from 2.5 to 10.0, from 2.5 to 7.0, from 2.5 to 5.0, from 2.5 to 4.5, from 2.5 to 4.0, from 2.5 to 3.5, or even from 2.5 to 3.0, or any and all sub-ranges formed from any of these endpoints.

In embodiments, the polyolefin elastomer may be formed in a batch, semi-batch, semi-continuous, or continuous process, using, for example, one or more solution polyalphaolefins reactor(s) operated in a single reactor, series reactors, or parallel reactors configuration. For example, the solution polyalphaolefins reactor(s) may be an adiabatic Continuous Stirred Tank Reactor (CSTR), a nonadiabatic CSTR or a loop reactor operated adiabatically or nonadiabatically. An ebulliently cooled CSTR, in which the polymerization is carried out in a homogeneous liquid solution while the heat of reaction is removed through evaporative cooling of the solvent and heating of unreacted ethylene gas, is also a suitable

reactor technology for production of the polyolefin elastomer.

Adhesive Composition

The polyolefin elastomers described herein may be used in adhesive compositions. The adhesive composition may generally be described as comprising the polyolefin elastomer, tackifier, oil, and, optionally, antioxidant.

In embodiments, the adhesive composition may comprise 20 wt% to 80 wt% of the polyolefin elastomer. In embodiments, the amount of the polyolefin elastomer in the adhesive composition may be greater than or equal to 20 wt%, greater than or equal to 30 wt%, greater than or equal to 40 wt%, or even greater than or equal to 50 wt%. In embodiments, the amount of the polyolefin elastomer in the adhesive composition may be less than or equal to 80 wt%, less than or equal to 70 wt%, or even less than or equal to 60 wt%. In embodiments, the amount of the polyolefin elastomer in the adhesive composition may be from 20 wt% to 80 wt%, from 20 wt% to 70 wt%, from 20 wt% to 60 wt%, from 30 wt% to 80 wt%, from 30 wt% to 70 wt%, from 30 wt% to 60 wt%, from 40 wt% to 80 wt%, from 40 wt% to 70 wt%, from 40 wt% to 60 wt%, from 50 wt% to 80 wt%, from 50 wt% to 70 wt%, or even from 50 wt% to 60 wt%, or any and all sub-ranges formed from any of these endpoints.

Tackifiers are known in the art, and may be solids, semi-solids, or liquids at room temperature. Tackifiers include, but are not limited to, aliphatic hydrocarbon resins (hydrogenated or not), aromatic hydrocarbon resins (hydrogenated or not), hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentadiene resins, hydrogenated aliphatic resin, hydrogenated aliphatic aromatic resins, hydrogenated terpenes and modified terpenes, hydrogenated rosin acids, hydrogenated rosin esters, derivatives thereof, and combinations thereof.

The adhesive composition may include a minimum amount of tackifier (e.g., greater than or equal to 1 wt%) to ensure that the adhesive composition achieves a desired $T_g$. The amount of the tackifier may be limited (e.g., less than or equal to 60 wt%) to reduce or limit leaching of the tackifier out of the adhesive composition. Accordingly, in embodiments, the adhesive composition may comprise 1 wt% to 60 wt% tackifier. In embodiments, the amount of tackifier in the adhesive composition may be greater than or equal to 1 wt%, greater than or equal to 5 wt%, greater than or equal to 10 wt%, greater than or equal to 15 wt%, or even greater than or equal to 20 wt%. In embodiments, the amount of tackifier in the adhesive composition may be less than or equal to 60 wt%, less than or equal to 50 wt%, less than or equal to 40 wt%, less than or equal to 30 wt%, or even less than or equal to 20 wt%. In embodiments, the amount of tackifier in the adhesive composition may be from 1 wt% to 60 wt%, from 1 wt% to 50 wt%, from 1 wt% to 40 wt%, from 1 wt% to 30 wt%, from 1 wt% to 20 wt%, from 5 wt% to 60 wt%, from 5 wt% to 50 wt%, from 5 wt% to 40 wt%, from 5 wt% to 30 wt%, from 5 wt% to 20 wt%, from 10 wt% to 60 wt%, from 10 wt% to 50 wt%, from 10 wt% to 40 wt%, from 10 wt% to 30 wt%, from 10 wt% to 20 wt%, from 15 wt% to 60 wt%, from 15 wt% to 50 wt%, from 15 wt% to 40 wt%, from 15 wt% to 30 wt%, from 15 wt% to 20 wt%, from 20 wt% to 60 wt%, from 20 wt% to 50 wt%, from 20 wt% to 40 wt%, or even from 20 wt% to 30 wt%, or any and all sub-ranges formed from any of the endpoints.

The adhesive composition may include a minimum amount of oil (e.g., greater than or equal to 1 wt%) to ensure that an adhesive composition including the polyolefin elastomer has a desired viscosity (e.g., a Brookfield viscosity of less than or equal to 30,000 mPas, as measured at 150 °C). The amount of oil may be limited (e.g., less than or equal to 30 wt%) as a relatively large amount of oil may lead to leaching of the oil out of the adhesive composition. Accordingly, in embodiments, the adhesive composition may comprise 0.1 wt% to 30 wt% oil. In embodiments, the amount of oil in the adhesive composition may be greater than or equal to 0.1 wt%, greater than or equal to 1 wt%, greater than or equal to 5 wt%, greater than or equal to 10 wt%, or even greater than or equal to 15 wt%. In embodiments, the amount of oil in the adhesive composition may be less than or equal to 30 wt%, less than or equal to 25 wt%, or even less than or equal to 20 wt%. In embodiments, the amount of oil in the adhesive composition may be from 0.1 wt% to 30 wt%, from 0.1 wt% to 25 wt%, from 0.1 wt% to 20 wt%, from 1 wt% to 30 wt%, from 1 wt% to 25 wt%, from 1 wt% to 20 wt%, from 5 wt% to 30 wt%, from 5 wt% to 25 wt%, from 5 wt% to 20 wt%, from 10 wt% to 30 wt%, from 10 wt% to 25 wt%, from 10 wt% to 20 wt%, from 15 wt% to 30 wt%, from 15 wt% to 25 wt%, or even from 15 wt% to 20 wt%, or any and all sub-ranges formed from any of these endpoints.

In embodiments, the oil comprises paraffinic oil, aromatic oil, naphthenic oil, or a combination thereof.

The adhesive composition may optionally comprise antioxidant. In embodiments, the adhesive composition may comprise 0 wt% to 1 wt% antioxidant. In embodiments, the amount of the antioxidant in the adhesive composition may be greater than or equal to 0 wt%, greater than or equal to 0.1 wt%, or even greater than or equal to 0.25 wt%. In embodiments, the amount of the antioxidant in the adhesive composition may be less than or equal to 1 wt%, less than or equal to 0.75 wt%, or even less than or equal to 0.5 wt%. In embodiments, the amount of the antioxidant in the adhesive composition may be from 0 wt% to 1 wt%, from 0 wt% to 0.75 wt%, from 0 wt% to 0.5 wt %, from 0.1 wt% to 1 wt%, from 0.1 wt% to 0.75 wt%, from 0.1 wt% to 0.5 wt %, from 0.25 wt% to 1 wt%, from 0.25 wt% to 0.75 wt%, or even from 0.25 wt% to 0.5 wt %, or any and all sub-ranges formed from any of these endpoints.

As mentioned herein, it may be desirable for the adhesive composition to have a certain viscosity depending on the method of applying the adhesive composition to a substrate, such as a sprayer. In embodiments, the adhesive composition may comprise a Brookfield viscosity of less than or equal to 20,000 mPas, as measured at 150 °C. In embodiments, the adhesive composition may comprise a Brookfield viscosity of less than or equal to 30,000 mPas, less than or equal to 25,000 mPas, less than or equal to 20,000 mPas; less than or equal to 15,000 mPas, less than or equal to 10,000 mPas, or even less than or equal to 7,500 mPa. In embodiments, the adhesive composition may comprise a Brookfield viscosity greater than or equal to 500 mPas, greater than or equal to 1,000 mPas, or even greater than or equal to 2,000 mPas. In embodiments, the adhesive composition may comprise a Brookfield viscosity from 500 mPas to 30,000 mPas; from 500 mPas to 25,000 mPas; from 500 mPas to 20,000 mPas; from 500 mPas to 15,000 mPas; from 500 mPas to 10,000 mPas; from 500 mPas to 7,500 mPas; from 1,000 mPas to 30,000 mPas; from 1,000 mPas to 25,000 mPas; from 1,000 mPas to 20,000 mPas; from 1,000 mPas to 15,000 mPas; from 1,000 mPas to 10,000 mPas; from 1,000 mPas to 7,500 mPas; from 2,000 mPas to 30,000 mPas; from 2,000 mPas to 25,000 mPas; from 2,000 mPas to 20,000 mPas; from 2,000 mPas to 15,000 mPas; from 2,000 mPas to 10,000 mPas; or even from 2,000 mPas to 7,500 mPas; or any and all sub-ranges formed from any of these endpoints.

Films

The adhesive compositions including the polyolefin elastomers described herein may be used in various applications, such as hygiene adhesives and packaging adhesives.

Referring now to FIG. 1, a film 100 may comprise at least a first polymer layer 102 and at least a second polymer layer 104 adhered by an adhesive composition 106 including a polyolefin elastomer as described herein. The film 100 may include additional polymer layers adhered by the adhesive composition 106.

The adhesive composition 106 may be applied to the first polymer layer 102 and or the second polymer layer 104 via spraying, spray patterning (spiral, signature, omega), or slot die coating.

The layer of adhesive composition 106 may have a weight from 1 grams per square meter (gsm) to 50 gsm, from 1 gsm, to 25 gsm, from 1 gsm, to 10 gsm, from 1 gsm to 5 gsm, from 5 gsm to 50 gsm, from 5 gsm to 25 gsm, from 5 gsm to 10 gsm, from 10 gsm to 50 gsm, from 10 gsm to 25 gsm, or even from 25 gsm to 50 gsm, or any and all sub-ranges formed from any of these sub-ranges formed from any of these endpoints..

Each of the first and the second polymer layers 102, 104 may comprise the same material or a different material. In embodiments, each of the first and the second polymer layers 102, 104 may comprise polyethylene, polypropylene, PET as a solid film or non-woven.

Each of the first and the second polymer layers 102, 104 may have a thickness from 5 gsm to 100 gsm, from 5 gsm to 75 gsm, from 5 gsm to 60 gsm, from 10 gsm to 100 gsm, from 10 gsm to 75 gsm, from 10 gsm to 60 gsm, from 15 gsm to 100 gsm, from 15 gsm to 75 gsm, or even from 15 gsm to 60 gsm, or any and all sub-ranges formed from any of these endpoints.

TEST METHODS

Gel Permeation Chromatography (GPC)

The chromatographic system consisted of a Polymer Char GPC-IR (Valencia, Spain) high temperature GPC chromatograph, equipped with an internal IR5 infrared detector (IRS). The autosampler oven compartment was set at 160 °C, and the column compartment was set at 150° Celsius. The columns were one Agilent PLgel MIXED 7.5 x 50 mm, 20 μm linear mixed-bed guard column and four Agilent PLgel MIXED-A 7.5 x 300 mm, 20 μm linear mixed-bed columns. The chromatographic solvent was 1,2,4-trichlorobenzene, which contained 300 ppm of butylated hydroxytoluene (BHT) and was nitrogen sparged. The injection volume used was 200 microliters, and the flow rate was 1.0 milliliters/minute.

Calibration of the GPC column set was performed using Agilent EasiCal Polystyrene standards (EasiCal PS-1 and EasiCal PS-2). Each EasiCal system consisted of two different spatulas supporting a mixture of 5 polymer standards (approximately 5 mg) to obtain 20 molecular weights points ranging from approximately 580 to 6,570,000 g/mole. Individual spatulas were added to septa-capped vials, sealed, and loaded into the Polymer Char autosampler. Polymer Char Instrument Control Software was utilized to add 8 mL of solvent to each vial and the standards were dissolved for 15 minutes at 160 °C under high-speed shaking prior to injection to the chromatography system. A third order polynomial was used to fit the nominal polystyrene standard peak molecular weights to obtain molecular weight equivalent calibration points at each chromatographic slice. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times \left(M_{polystyrene}\right)^{B} \qquad \text{(EQ1)}$$

where M is the molecular weight, A has a value of 0.41 and B is equal to 1.0.

The total plate count of the GPC column set was performed with decane (3% v/v in 1,2,4-trichlorobenzene (TCB) introduced via micropump). The plate count for the chromatographic system should be greater than 18,000 for the 4 Agilent "Mixed A" 30 cm 20-micron linear mixed-bed columns.

Samples were prepared in a semi-automatic manner with the Polymer Char Instrument Control Software, wherein the samples were weight-targeted at 2 mg/ml, and the solvent was added to a septa-capped sealed vial *via* the Polymer Char high temperature autosampler. The samples were dissolved for two hours at 160° Celsius under high-speed shaking.

The calculations of $M_{n(GPC)}$, $M_{w(GPC)}$, and $M_{z(GPC)}$ were based on GPC results using the internal IR5 detector (measurement channel) of the Polymer Char GPC-IR chromatograph according to Equations 2-4.Using Polymer Char GPCOne™ software, the baseline-subtracted IR chromatogram at each equally-spaced data collection point (i) was converted to the polyethylene equivalent molecular weight, obtained from the narrow standard calibration curve, for the equivalent chromatographic data point (i).Equations 2-4 are as follows:

$$Mn(GPC) = \frac{\sum^{i} IR_i}{\sum^{i}\left( IR_i / M_{polyethylene_i}\right)} \qquad \text{(EQ 2)}$$

$$Mw(GPC) = \frac{\sum^{i}\left( IR_i * M_{polyethylene_i}\right)}{\sum^{i} IR_i} \qquad \text{(EQ 3)}$$

$$Mz(GPC) = \frac{\sum^{i}\left( IR_i * M_{polyethylene_i}{}^{2}\right)}{\sum^{i}\left( IR_i * M_{polyehtylene_i}\right)} \qquad \text{(EQ 4)}$$

In order to monitor the deviations over time, a flowrate marker (3% v/v decane in solvent) was introduced into each sample *via* a micropump controlled with the Polymer Char GPC-IR system. This flowrate marker (FM) was used to linearly correct the pump flowrate ($\text{Flowrate}_{(nominal)}$) for each sample by RV alignment of the respective decane peak within the sample ($RV_{(FM\ Sample)}$) to that of the decane peak within the narrow standards calibration ($RV_{(FM\ Calibrated)}$). Any changes in the time of the decane marker peak were then assumed to be related to a linear-shift in flowrate ($\text{Flowrate}_{(effective)}$) for the entire run. After calibrating the system based on a flow marker peak, the effective flowrate (with respect to the narrow standards calibration) is calculated as Equation 5. Processing of the flow marker peak was done *via* the Polymer Char GPCOne™ Software. Acceptable flowrate correction is such that the effective flowrate should be within +/-0.7% of the nominal flowrate.

$$\text{Flowrate}_{(effective)} = \text{Flowrate}_{(nominal)} * \left(RV_{(FM\ Calibrated)} / RV_{(FM\ Sample)}\right) \qquad \text{(EQ 5)}$$

Polydispersity Index (PDI)

PDI was calculated as a ratio weight average molecular weight to number average molecular weight (i.e., $M_w/M_n$), as measured according to GPC.

Differential Scanning Calorimetry (DSC)

Melting temperature ($T_m$) and glass transition temperature ($T_g$) were measured using DSC (Discovery Series DSC, TA Instruments, Inc.) using a heat-cool-heat temperature profile. Samples of 3 mg to 6 mg were loaded in open hermetic aluminum pans and temperature equilibration was achieved at 200 °C. After being held at this temperature for 2 min, the samples were cooled to -90 °C at 10 °C/min and then held at -90 °C for 4 minutes. The samples were then heated back up to 200 °C at 10 °C/min. Traces of the second heat cycle were analyzed individually using TA Trios software.

Brookfield Viscosity

Polymer viscosity was measured using a Brookfield Viscometer according to ASTM D3236 at 177 °C. Adhesive formulation viscosity was measured using a Brookfield Viscometer at 150 °C.

Peel Strength

Peel strength was measured according to ASTM 1876 at the indicated loading amount.

EXAMPLES

Additives

REGALITE™ R1090 is a fully hydrogenated tackifier available from Eastman Chemical Company and having a $T_g$ of 36 °C and a softening point of 87 °C.

CATENEX™ T145 is a hydrogenated paraffinic process oil available from Shell.

IRGANOX® 1010 is a phenolic antioxidant available from BASF.

Polymer Synthesis Procedure - Example Polymers E1-E3

Norbornene was prepared as a 50 wt% solution in Isopar™ E and filtered through activated alumina prior to use. 1-Octene was purified by filtering through activated alumina. Anhydrous toluene and Isopar E were purified *via* passage through activated alumina. Alumina for solvent purification was activated by passing a stream of nitrogen through the alumina for 8 hours at 300 °C. Solvents used for experiments performed in a nitrogen-filled glovebox were further dried by storage over activated 4Å molecular sieves. Glassware for moisture-sensitive reactions was dried in an oven at 130 °C overnight prior to use.

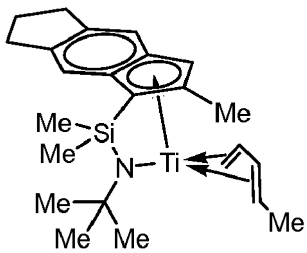

**Catalyst A**

The reactor effluent lines were kept warm using electrical heat tapes. The polymer solution in the reactor was mechanically agitated at 1,300 rpm. Catalyst A (shown above, 0.5 millimolar solution (mM)), Amines, bis(hydrogenated tallow alkyl)methyl, tetrakis(pentafluorophenyl)borate(1-)(activator, 0.6 mM), and modified methylaluminoxane, type 3A (MMAO-3A, 1.25 mM) solutions were prepared in Isopar E solvent. All liquids (solvent, 1-octene, Catalyst A, activator, cyclic termonomer) were delivered via syringe pumps in an adjacent glove box. MMAO-3A was used as a scavenger. Hydrogen (20 mol % in helium) and ethylene were fed from cylinders, into the feed mixing valve where they mixed with Isopar E, 1-octene, and cyclic termonomer before entering the reactor. All other components entered through separate lines and mixed in the reactor. The Isopar E, 1-octene, cyclic comonomer, and were fed to the reactor according to the process conditions outlined in Table 1. Catalyst A concentration was manipulated to control the C2 Exit concentration in the reactor effluent and the Activator to Catalyst A metal molar ratio was 1.2. The aluminum to Catalyst A metal molar ratio was manipulated to a value of 2.5 to maximize the catalyst activity.

**Table 1**

| *Examples* | *E1* | *E2* | *E3* |
|---|---|---|---|
| *C2 Feed (normalized)* | 1.0 | 1.0 | 1.0 |
| *C8 Feed / C2 Feed Weight Flow Ratio* | 0.15 | 0.13 | 0.39 |
| *Norbornene Feed / C2 Feed Weight Flow Ratio* | 0.54 | 0.60 | 0.43 |
| *H2 Feed / C2 Feed Weight Flow Ratio* | $5.1 \times 10^{-4}$ | $5.7 \times 10^{-4}$ | $5.7 \times 10^{-4}$ |
| *Isopar E Feed / C2 Feed Weight Flow Ratio* | 8.51 | 4.48 | 4.48 |

(continued)

| Examples | E1 | E2 | E3 |
|---|---|---|---|
| C2 Exit (g/L) | 6.9 | 12.0 | 11.8 |

Once the reactor was heated to 140 °C with solvent at the desired pressure of 600 psig, the following were added in this order: 1-octene, hydrogen, Catalyst A, activator, cyclic termonomer. Each time liquid was added, the solvent flow was reduced by an equivalent amount to maintain a total flow of 12.5 mL/min. Lastly, ethylene was incrementally added until reaching the target flow rate (700-1,200 sccm on a volume basis and 53-90 grams/hr on a mass basis).

An FTNIR instrument was used to provide real-time analysis of the ethylene monomer concentration in the reactor effluent. Catalyst flow was used to control the ethylene exit concentration, targeting 7-12 g/L (+/-0.5 g/L). Once 4.5 residence times had passed, at the desired polymerization conditions a sample was collected. During scale-up, samples were taken for 45 minutes, a new stainless-steel beaker was swapped-in, and the next 45-minute collection was initiated while keeping conditions constant to maintain the target ethylene concentration in the CSTR effluent. The stainless-steel beakers were transferred to pans to cool and dry in a hood. They were then placed in a vacuum oven to further dry at a final vacuum pressure less than 200 mmHg-abs and a temperature equal to about 140 °C for at least 4 hours.

Polymer Synthesis Procedure - Example Polymer E4

FIG. 2 shows the basic process flow diagram (PFD) that was used to produce Example Polymer E4 in a continuous reactor configuration. A liquid-full, nonadiabatic continuously stirred tank reactor (NA-CSTR) was used to produce the ethylene-based terpolymer. A coriolis flowmeter - analog valve pair was used to meter each of the polymerization grade gases, ethylene ($C_2$) and hydrogen ($H_2$), into the liquid feed flowing to the NA-CSTR. The nonreactive aliphatic, hydrocarbon Isopar E (solvent) was used to dissolve the gaseous reactants and remove some of the heat energy from the catalytic polymerization reaction. The reactive 1-octene (1-$C_8$) comonomer and 5-ethylidene 2-norbornene (ENB) termonomer also served to dissolve the gaseous reactants and remove some of the heat energy from polymerization while the ratio of the 2 were adjusted to produce a terpolymer with the target solid polymer density and $T_g$ values.

Isopar E, 1-octene comonomer, and 5-ethylidene 2-norbornene termonomer were separately pumped using diaphragm style, positive displacement, metering pumps. For a given ethylene feed rate, the Isopar E flow rate was controlled at a targeted solvent to ethylene mass ratio to produce the sample. For that same ethylene feed rate, the ethylene to hydrogen and 1-octene mass ratios as well as the ENB to 1-octene mass ratio were manipulated to produce sample E/O/ENB-1 with the correct polymer melt viscosity, solid polymer density, and polymer glass transition temperature. Hydrogen was mixed into the ethylene and that combined gaseous feed was dissolved and mixed into the liquid feed comprised of solvent, 1-octene, and ENB. The total reactor feed past through a feed temperature control system comprised of a feed heat exchanger and a bypass around the exchanger. The flows through and around the heat exchanger were manipulated, using an analog valve, to control the feed at the target temperature.

The 3-component catalyst package used to produce Example Polymer E4 was comprised of the Catalyst A, Amines, bis(hydrogenated tallow alkyl)methyl, tetrakis(pentafluorophenyl)borate(1-)(activator), and MMAO-3A impurity scavenger. Each component was separately pumped using diaphragm style, positive displacement, metering pumps. The catalyst was metered to the reactor to control the mass of the feed ethylene converted to polymer. For complete catalyst activation and maximum productivity, the pump mass feed rate for activator and MMAO-3A were manipulated to maintain the activator to titanium molar ratio and the aluminum to titanium molar ratio at the required values while the catalyst complex was continuously manipulated to maintain the target ethylene conversion.

A portion of the heat of reaction was removed via the sensible heat rise of the feed flowing into the reactor. The NA-CSTR was equipped with a jacket around the vessel body. Hot oil flowed through the jacket, and this removed the remaining heat of polymerization to keep the reactor temperature at target.

A premixed solution of catalyst-kill (deionized water) and Irganox 1010 antioxidant (AO) in solvent was injected into the reactor effluent upstream of the mixer. The water hydrolyzed the catalyst to terminate the polymerization reaction and the Irganox 1010 stabilized the polymer during the 2-stage devolatilization that separated the volatile components (i.e., solvent, and unreacted ethylene, 1-octene, ENB, and hydrogen) from the polymer. A diaphragm style, positive displacement, metering pump was used to feed the package to the reactor effluent at a rate that produced the targeted concentration of each component in the polymer melt. After separating the polymer melt from the volatiles, it was converted to solid granules. A portion of the sample in granule form was transferred to the laboratory to measure the solid polymer density, the melt viscosity at 177 °C, and the polymer glass transition temperature. The control methods described below to manipulate the reaction conditions to make the polymer with the desired value for each of these 3 parameters.

The solution viscosity of the polymer in the reactor effluent was measured and the ethylene to hydrogen mass

ratio was manipulated to reach the target logarithmic-10 solution viscosity which was an in-situ measure of the polymer melt viscosity measured in the laboratory using ASTM D3236. The ethylene to hydrogen mass ratio was adjusted to yield a polymer logarithmic-10 solution viscosity at reactor temperature ($Log_{10}$(mPas) at reactor temperature) that produced a melt viscosity measurement, in millipascal-seconds (mPas), with the target value.

Another portion of the polymer sample was melted, molded, and pressed into a plaque using ASTM D4703, A1 Process C and the solid plaque density was measured via ASTM D792. The ENB to 1-octene mass ratio was manipulated to control the solid polymer density at target. To increase the polymer density, the ENB to 1-octene mass ratio was decreased and reducing the density required an increase in that ratio.

The polymer glass transition temperature was measured via ASTM D3418. The ethylene to 1-octene ratio was manipulated to control the polymer Tg at target. To increase the Tg the ethylene to 1-octene mass ratio was increased and reducing the ethylene to 1-octene mass ratio decreased the polymer Tg.

The production conditions for Example Polymer E4 are documented in Table 2.

**Table 2**

| ***Parameter*** | ***Units*** | ***E4*** |
|---|---|---|
| ***Feed Conditions*** | | |
| *Feed Temperature* | *°C* | *15* |
| *Normalized Ethylene Mass Flow* | *kg* | *1* |
| *Solvent to Ethylene Mass Ratio* | *kg Solvent / kg* $C_2$ | 1.4 |
| *Ethylene to 1-Octene Mass Ratio* | *kg* $C_2$ */ kg 1-*$C_8$ | 6.2 |
| *ENB to 1-Octene Mass Ratio* | *kg ENB / kg 1-*$C_8$ | 2.7 |
| *Ethylene to Hydrogen Mass Ratio* | *kg* $C_2$ */ kg* $H_2$ | *960* |
| ***Catalyst Conditions*** | | |
| *Normalized Catalyst Metal Molar Flow* | *mole* | *1* |
| *Cocatalyst-1 Activator to Catalyst Metal Molar Ratio* | *moles activator/ mole Ti* | 1.2 |
| *Cocatalyst-2 Scavenger to Catalyst Metal Molar Ratio* | *moles Al/ mole Ti* | *6.0* |
| ***Reaction Conditions*** | | |
| *Reactor Temperature* | *°C* | *130* |
| *Reactor Pressure* | *psig* | 725 |
| *Agitator Power Input* | *hp/10,000 gallons* | *15.0* |
| *$Log_{10}$(Solution Viscosity) at Reactor Temperature* | *$Log_{10}$(mPas) at Reactor Temperature* | *1.64* |
| *Solution Viscosity at Reactor Temperature* | *mPas at Reactor Temperature* | *43.8* |
| *Ethylene Mass Conversion* | *wt%* | *89.5* |
| *1-Octene Mass Conversion* | *wt%* | *61.1* |
| *Hydrogen Mass Conversion* | *wt%* | *63.6* |
| *Heat Removed via Feed Adiabatic Temperature Rise* | % | 23 |
| *Heat Removed via Hot Oil Flow through Reactor Jacket* | % | 77 |

## Polymer Compositions and Properties

The compositions (in mol%) and properties of Example Polymers E1-E4 and Comparative Polymer C1 are provided in Table 3. Comparative Polymer C1 was AFFINITY™ GA 1900, manufactured by Dow Inc.

The $T_g$ of 1-octene homopolymer (i.e., polyoctene) is about -63 °C.

The $T_g$ of norbornene homopolymer (i.e., polynorbornene) is about 380 °C.

The $T_g$ of 5-ethylidene-2-norbornene homopolymer is about 178 °C.

**Table 3**

| *Polymers* | *E1* | *E2* | *E3* | *E4* | *C1* |
|---|---|---|---|---|---|
| *ethylene (mol%)* | 88.2 | 88.6 | 89.4 | 91.5 | 89.5 |
| *1-octene (mol%)* | 1.4 | 1.2 | 3.4 | 2.5 | 10.5 |
| *norbornene (mol%)* | 10.4 | 10.2 | 7.2 | - | - |
| *5-ethylidene-2-norbornene (mol%)* | - | - | - | 5.9 | - |
| $T_m$ *(°C)* | 61.4 | 61.4 | 64.6 | 82.0 | 68.8 |
| $T_g$ *(°C)* | -14.6 | -14.6 | -28.5 | -15.0 | -54.2 |
| $M_w$ *(g/mol)* | 13,849 | 17,465 | 19,977 | 16,000 | 16,770 |
| *PDI* | 2.3 | 2.3 | 2.3 | 2.1 | 2.4 |

Example Polymers E1, E2, E3, and E4, polyolefin elastomers comprising ethylene, $C_3$-$C_{14}$ $\alpha$-olefin (1-octene), and cyclic olefin (norbornene or 5-ethylidene-2-norbornene), had a $T_g$ of -14.6 °C, -14.6 °C, -28.5, and -15.0 °C, respectively. As exemplified by Example Polymers E1, E2, E3, and E4, utilizing a combination of ethylene, $C_3$-$C_{14}$ $\alpha$-olefin, whose homopolymer has a relatively low $T_g$, and cyclic olefin, whose homopolymer has a relatively high $T_g$, results in a polyolefin elastomer having a tailored $T_g$ (e.g., -50 °C to 30 °C).

Comparative Polymer C1, a polyolefin elastomer comprising ethylene and $C_3$-$C_{14}$ $\alpha$-olefin (1-octene) and lacking cyclic olefin, had a $T_g$ of -54.6 °C. As exemplified by Comparative Polymer C1, a polyolefin elastomer lacking cyclic olefin may not achieve a tailored $T_g$ (e.g., -50 °C to 30 °C).

Adhesive Composition Formulation

The composition (in wt%) and properties of Example Adhesive Compositions EA1-EA4 and Comparative Adhesive Composition CA1 are provided in Table 4.

Adhesive compositions were prepared using a laboratory type adhesive mixer (HF MIXING GROUP).Each sample was prepared by first weighing the appropriate amount of each component as shown in Table 4 (in wt%) in order to make 1,000 g batches of sample. Ingredients were added to the pre-heated (at 180 °C) mixing chamber until melted in the following sequence: first polymer, second oil and third tackifier plus antioxidant. In the process, two mixing stages were employed: 3 minutes at 20 rpm followed by 10 minutes at 66 rpm. Set temperature for the regulator was 180 °C during all the mixing steps. Formulations were visually inspected for homogeneity and, when thoroughly mixed, the sample was poured out onto a recipient covered by silicone paper.

Non-Woven Spray Application Procedure

Coating of Example Adhesive Compositions EA1-EA4 and Comparative Adhesive Composition CA1 was applied via transfer coating at 1, 2, 3, and 4 per square meter (gsm) onto a polypropylene non-woven using Nordson/JHT lab coater with a slot applicator and a polyethylene back sheet. All temperature settings for the coater were 150 °C.

**Table 4**

| *Adhesive Compositions* | *EA1* | *EA2* | *EA3* | *EA4* | *CA1* |
|---|---|---|---|---|---|
| *Example Polymer* | E1 | E2 | E3 | E4 | C1 |
| *Polymer (wt%)* | 59.5 | 59.5 | 59.5 | 59.5 | 59.5 |
| *REGALITE™ R1090 (wt%)* | 20.0 | 20.0 | 20.0 | 20.0 | 20.0 |
| *CATENEX™ T145 (wt%)* | 20.0 | 20.0 | 20.0 | 20.0 | 20.0 |
| *IRGANOX® 1010 (wt%)* | 0.5 | 0.5 | 0.5 | 0.5 | 0.5 |
| *Viscosity (mPas)* | 2,333 | 6,563 | 7,650 | 2,333 | 2,805 |

Peel Strength Evaluation

The peel strengths of Example Adhesive Compositions EA1-EA4 and Comparative Adhesive Composition CA1

at different loading amounts are shown in Table 5.

**Table 5**

| *Adhesive Compositions* | | *EA1* | *EA2* | *EA3* | *EA4* | *CA1* |
|---|---|---|---|---|---|---|
| *Loading Amount (gsm)* | *1* | 0.19 ± 0.03 | 0.25 ± 0.03 | 0.07 ± 0.01 | 0.02 ± 0.01 | 0.07 ± 0.01 |
| | *2* | 0.39 ± 0.15 | 0.35 ± 0.07 | 0.13 ± 0.04 | 0.03 ± 0.00 | 0.09 ± 0.01 |
| | *3* | 0.46 ± 0.06 | 0.43 ± 0.11 | 0.39 ± 0.13 | 0.07 ± 0.01 | 0.08 ± 0.01 |
| | *4* | 0.56 ± 0.15 | 0.66 ± 0.14 | 0.46 ± 0.06 | 0.07 ± 0.01 | 0.19 ± 0.01 |

Referring now to FIG. 3, the relationship between the peel strengths and $T_g$ of the polyolefin elastomers of Example Adhesive Compositions EA1, EA2, and EA3 and Comparative Adhesive Composition CA1 is shown. There was a direct relationship between the $T_g$ of the polyolefin elastomer used in the adhesive composition and the peel strength of the adhesive composition, with increased polyolefin elastomer $T_g$ leading to increased peel strength. As exemplified by Example Adhesive Compositions EA1, EA2, and EA3 and Comparative Adhesive Composition CA1, utilizing a polyolefin elastomer having a tailored $T_g$ (e.g., -50 °C to 30 °C) imparts an improved peel strength to the adhesive composition formed using same

Regarding Example Adhesive Composition EA4, while not wishing to be bound by theory, it is believed that the relatively high $T_m$ of the polyolefin elastomer, due to the relatively higher amount of ethylene as compared to the other example polymers, compromised the adhesive performance of the adhesive composition.

While particular embodiments of the present disclosure have been illustrated and described, it would be obvious to those skilled in the art that various other changes and modifications can be made without departing from the spirit and scope of the disclosure. It is therefore intended to cover in the appended claims all such changes and modifications that are within the scope of this disclosure.

## Claims

**1.** A polyolefin elastomer comprising:

a polymerized reaction product of:

50 mol% to 99.5 mol% ethylene;
0.5 mol% to 30 mol% $C_3$-$C_{14}$ $\alpha$-olefin; and
0.5 mol% to 20 mol% cyclic olefin,

wherein the polyolefin elastomer comprises:

a glass transition temperature ($T_g$) of -50 °C to 30 °C, as measured according to Differential Scanning Calorimetry (DSC); and
a weight averaged molecular weight ($M_w$) of 5,000 g/mol to 150,000 g/mol as measured according to conventional Gel Permeation Chromatography (GPC).

**2.** The polyolefin elastomer of claim 1, wherein a molar ratio of the $C_3$-$C_{14}$ $\alpha$-olefin to the cyclic olefin is from 1:0.08 to 0.08:1.

**3.** The polyolefin elastomer of any preceding claim, wherein a homopolymer of the $C_3$-$C_{14}$ $\alpha$-olefin comprises a $T_g$ less than or equal to 10 °C, as measured according to DSC.

**4.** The polyolefin elastomer of any preceding claim, wherein a homopolymer of the cyclic olefin comprises a $T_g$ greater than or equal to 30 °C, as measured according to DSC.

**5.** The polyolefin elastomer of any preceding claim, wherein the polyolefin elastomer comprises a crystallinity of 0% to 40%, as measured according to DSC.

**6.** The polyolefin elastomer of any preceding claim, wherein the cyclic olefin comprises norbornene, 5-ethylidene-2-norbornene, cyclopentene, dicyclopentadiene, or a combination thereof.

**7.** The polyolefin elastomer of any preceding claim, wherein the $\alpha$-olefin comprises octene.

**8.** The polyolefin elastomer of any preceding claim, wherein the $M_w$ of the polyolefin elastomer is from 10,000 g/mol to 25,000 g/mol, as measured according to GPC.

**9.** The polyolefin elastomer of any preceding claim, wherein the polyolefin elastomer comprises a melting temperature ($T_m$) of less than or equal to 100 °C, as measured according to DSC.

**10.** The polyolefin elastomer of any preceding claim, wherein the polyolefin elastomer comprises a polydispersity index (PDI) of 1.5 to 20.0.

**11.** The polyolefin elastomer of any preceding claim, wherein the polyolefin elastomer comprises:
the polymerized reaction product of:

85 mol% to 93 mol% ethylene;
1 mol% to 5 mol% $C_3$-$C_{14}$ $\alpha$-olefin; and
5 mol% to 15 mol% cyclic olefin.

**12.** The polyolefin elastomer of any preceding claim, wherein the $T_g$ of the polyolefin elastomer is from -30 to -10 °C.

**13.** An adhesive composition comprising, based on a total weight of the adhesive composition:

20 wt% to 80 wt% of the polyolefin elastomer of any of claims 1-12;
1 wt% to 60 wt% tackifier;
0.1 wt% to 30 wt% of oil; and
0 wt% to 1 wt% antioxidant.

**14.** The adhesive composition of claim 13, wherein the adhesive composition comprises a Brookfield viscosity of less than or equal to 30,000 mPas, as measured at 150 °C.

**15.** A film comprising at least a first polymer layer, and at least a second polymer layer adhered via the adhesive composition of claim 13 or claim 14.

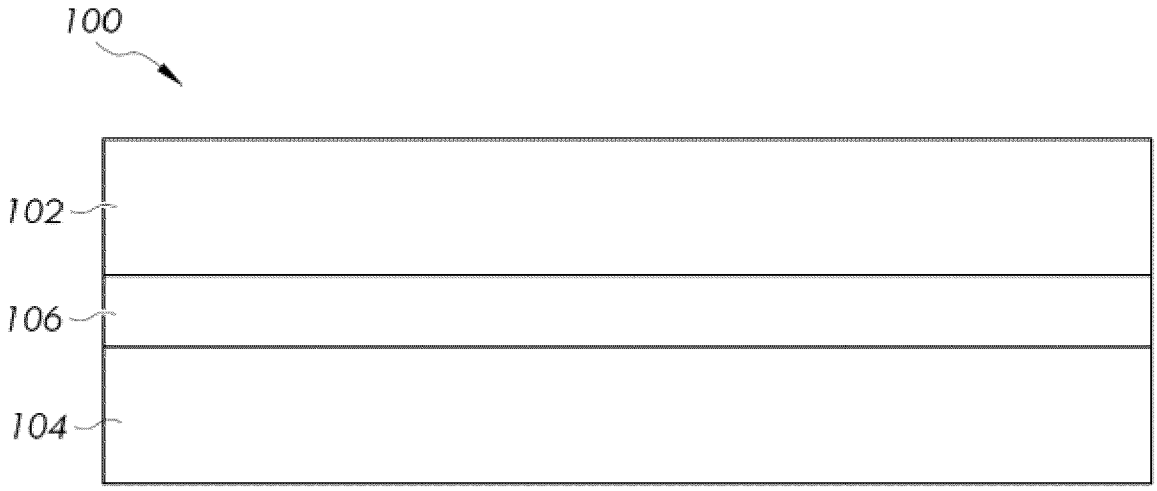


FIG. 1

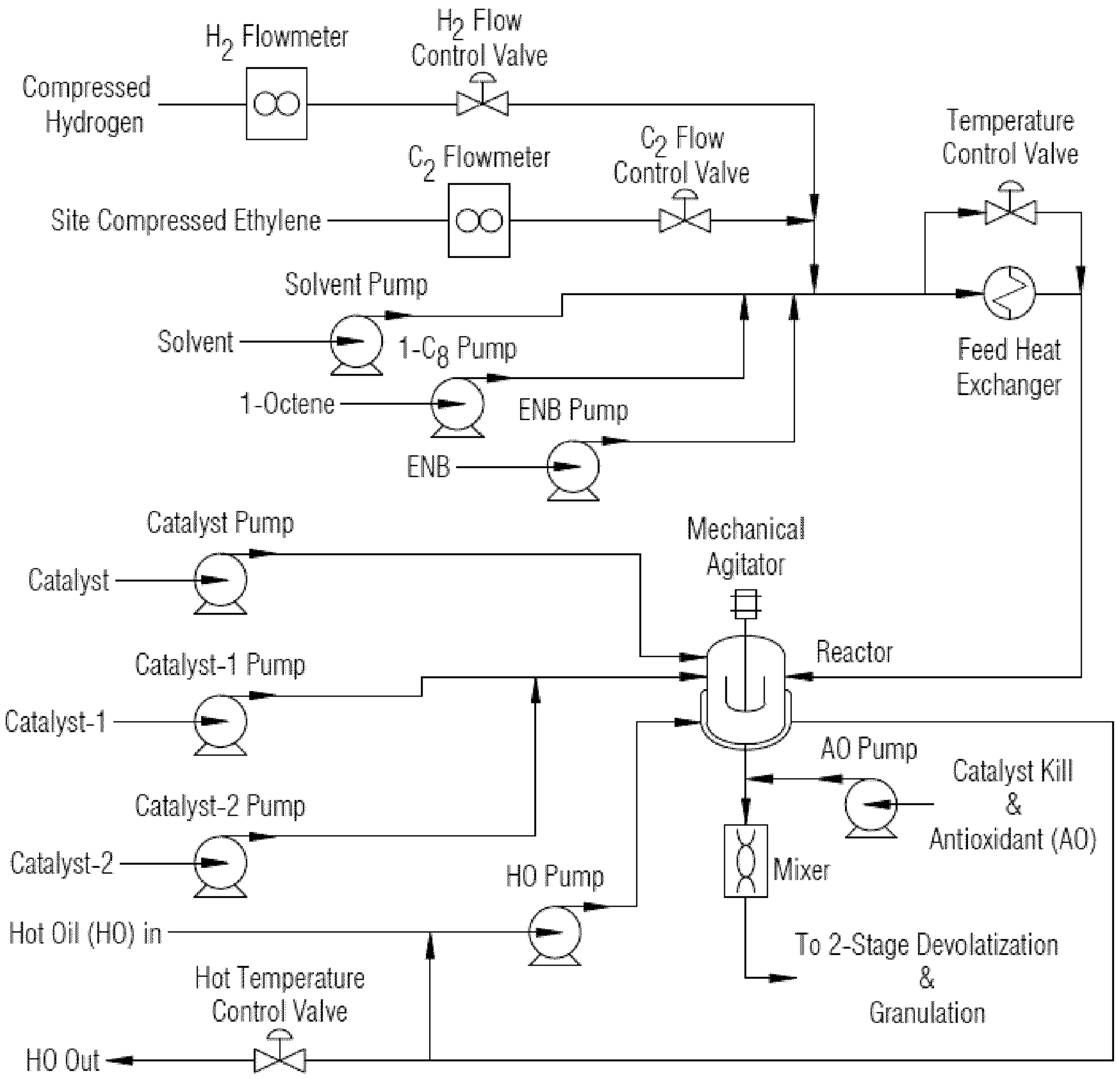
H2 Flowmeter
H2 Flow Control Valve
Compressed Hydrogen
C2 Flowmeter
C2 Flow Control Valve
Temperature Control Valve
Site Compressed Ethylene
Solvent Pump
Solvent
1-C8 Pump
1-Octene
ENB Pump
ENB
Feed Heat Exchanger
Catalyst Pump
Catalyst
Mechanical Agitator
Reactor
Catalyst-1 Pump
Catalyst-1
AO Pump
Catalyst Kill & Antioxidant (AO)
Catalyst-2 Pump
Catalyst-2
Mixer
HO Pump
Hot Oil (HO) in
To 2-Stage Devolatization & Granulation
Hot Temperature Control Valve
HO Out

FIG. 2

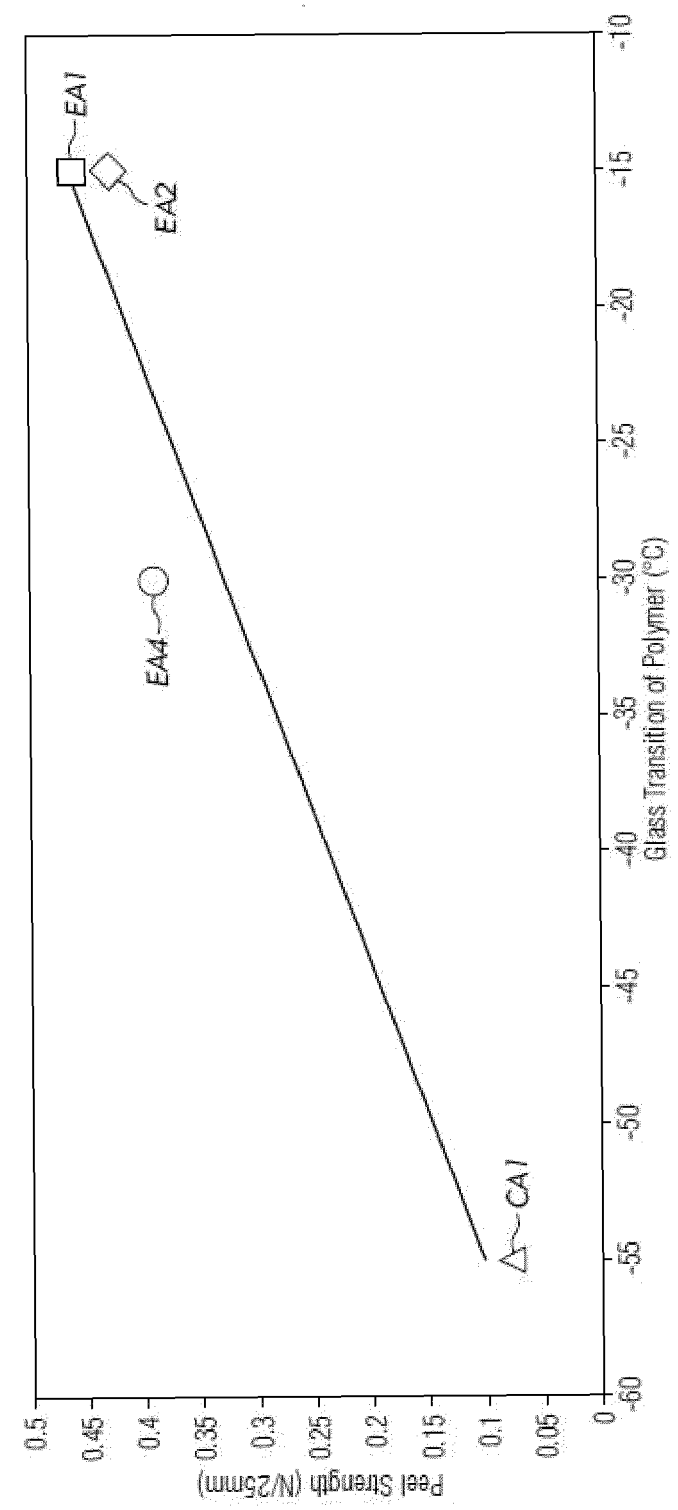

EA1
EA2
EA4
CA1
Peel Strength (N/25mm)
0
0.05
0.1
0.15
0.2
0.25
0.3
0.35
0.4
0.45
0.5
Glass Transition of Polymer (°C)
-60
-55
-50
-45
-40
-35
-30
-25
-20
-15
-10


FIG. 3

Europäisches Patentamt
European Patent Office
Office européen des brevets

# EUROPEAN SEARCH REPORT

Application Number
EP 24 38 2544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 5 942 587 A (ARJUNAN PALANISAMY [US] ET AL) 24 August 1999 (1999-08-24)<br>* examples 5-8 *<br>* tables 5-8 *<br>* claims 1-38 * | 1-12<br>13-15 | INV.<br>C08F210/16<br>C08F210/14<br>C08F232/04<br>C08F4/649<br>C08F236/20<br>C08F4/6592 |
| X<br>A | EP 2 945 972 B1 (DOW GLOBAL TECHNOLOGIES LLC [US]) 11 October 2023 (2023-10-11)<br>* table 3 *<br>* claims 1-2 *<br>* paragraphs [0139] - [0140] * | 1-6,10<br>7-9, 11-15 | |
| X<br>A | WO 2018/191010 A1 (EXXONMOBIL CHEMICAL PATENTS INC [US])<br>18 October 2018 (2018-10-18)<br>* example 1 *<br>* claims 1-27 * | 1-6,10<br>7-9, 11-15 | |
| A | WO 2019/182968 A1 (EXXONMOBIL CHEMICAL PATENTS INC [US])<br>26 September 2019 (2019-09-26)<br>* paragraphs [0105], [0251] *<br>* tables 1, 2 *<br>* claims 1-63 * | 1-15 | TECHNICAL FIELDS SEARCHED (IPC)<br>C08F |

The present search report has been drawn up for all claims

1

| Place of search | Date of completion of the search | Examiner |
|---|---|---|
| Munich | 11 November 2024 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 38 2544

This annex lists the patent family members relating to the patent documents cited in the above-mentioned European search report. The members are as contained in the European Patent Office EDP file on The European Patent Office is in no way liable for these particulars which are merely given for the purpose of information.

11-11-2024

| Patent document cited in search report | | Publication date | Patent family member(s) | | | Publication date |
|---|---|---|---|---|---|---|
| US 5942587 | A | 24-08-1999 | BR | 9814677 | A | 03-10-2000 |
| | | | CA | 2306410 | A1 | 03-06-1999 |
| | | | CN | 1286704 | A | 07-03-2001 |
| | | | DE | 69825312 | T2 | 11-08-2005 |
| | | | EP | 1034197 | A1 | 13-09-2000 |
| | | | ES | 2221223 | T3 | 16-12-2004 |
| | | | JP | 4290328 | B2 | 01-07-2009 |
| | | | JP | 2002531586 | A | 24-09-2002 |
| | | | KR | 20010032325 | A | 16-04-2001 |
| | | | US | 5942587 | A | 24-08-1999 |
| | | | WO | 9926989 | A1 | 03-06-1999 |
| EP 2945972 | B1 | 11-10-2023 | BR | 112015013530 | A2 | 11-07-2017 |
| | | | CN | 104884483 | A | 02-09-2015 |
| | | | EP | 2945972 | A1 | 25-11-2015 |
| | | | ES | 2961907 | T3 | 14-03-2024 |
| | | | JP | 6175146 | B2 | 02-08-2017 |
| | | | JP | 2016503831 | A | 08-02-2016 |
| | | | KR | 20150109361 | A | 01-10-2015 |
| | | | RU | 2015134543 | A | 27-02-2017 |
| | | | SG | 11201504578X | A | 28-08-2015 |
| | | | US | 2015307643 | A1 | 29-10-2015 |
| | | | WO | 2014113046 | A1 | 24-07-2014 |
| WO 2018191010 | A1 | 18-10-2018 | NONE | | | |
| WO 2019182968 | A1 | 26-09-2019 | CN | 111868117 | A | 30-10-2020 |
| | | | CN | 112004841 | A | 27-11-2020 |
| | | | EP | 3768740 | A1 | 27-01-2021 |
| | | | EP | 3768741 | A1 | 27-01-2021 |
| | | | SG | 11202008735R | A | 29-10-2020 |
| | | | SG | 11202009191R | A | 29-10-2020 |
| | | | WO | 2019182968 | A1 | 26-09-2019 |
| | | | WO | 2019182979 | A1 | 26-09-2019 |
| | | | WO | 2019182982 | A1 | 26-09-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **WILLIAMS** ; **WARD**. *J. Polym. Sci., Polym. Let.*, 1968, vol. 6, 621